# FASCICULE DE BREVET EUROPEEN

(11) **EP 2 895 903 B1**
(45) Date de publication et mention de la délivrance du brevet: **17.02.2021**
(21) Numéro de dépôt: 13785612.6
(22) Date de dépôt: 23.08.2013
(51) Int. Cl.: G02B 6/38

(54) **CONTACT ETANCHE EN POSITION DECONNECTEE POUR CONNECTEUR**
IN DER GETRENNTEN POSITION VERSIEGELTER KONTAKT FÜR EINEN VERBINDER
CONTACT THAT IS SEALED IN THE DISCONNECTED POSITION FOR A CONNECTOR

(30) Priorité: 12.09.2012 CH 16572012
(43) Date de publication de la demande: 22.07.2015
(73) Titulaire: Fischer Connectors Holding S.A., 1162 St-Prex (CH)
(72) Inventeur: MIEVILLE, Jacques, CH-1054 Morrens (CH); TESTAZ, Olivier, CH-1052 Le Mont (CH)
(74) Mandataire: Grosfillier, Philippe
(86) Numéro de dépôt international: PCT/IB2013/056832
(87) Numéro de publication internationale: WO 2014/041450

(56) Documents cités:
- WO-A1-2012/056691
- GB-A- 1 450 760
- US-A1- 2001 014 197
- US-B1- 6 357 929

## Description

### DOMAINE TECHNIQUE ET ART ANTERIEUR

La présente invention concerne les connecteurs, en particulier les connecteurs optiques.

Plus précisément, la présente invention concerne des connecteurs optiques comportant des contacts qui conservent des propriétés d'étanchéité lorsqu'ils sont déconnectés afin d'éviter que des matières et/ou des poussières ne les abîment.

Un exemple typique d'un tel contact/connecteur est donné dans le brevet US 6,357,929.

D'autres exemples de tels contacts/connecteurs sont commercialisés par les sociétés Glenair® ou Souriau® et sont décrits dans les pages internet aux adresses suivantes http://www.glenair.com/contacts/pdf/fiber optic 181 043.pdf http://www.glenair.com/contacts/pdf/fiber optic 181 050.pdf http://www.glenair.com/contacts/qpl_and_commercial_high_performance_fiber_optic_t ermini.htm http://www.souriau.com/fileadmin/Souriau/product_pdf/ELIO-Fiber-Optic-Contact.pdf

Actuellement, il existe dans le domaine de la connectique fibre optique des contacts étanches déconnectés avec des O rings au niveau des ferrules. Cependant le fonctionnement de ces contacts peut être affecté par le joint O-Ring. En effet, le principe de base d'un contact fibre optique dans l'état de la technique est d'isoler mécaniquement les ferrules et la douille d'alignement du reste du connecteur.

Dans des connecteurs connus la solution trouvée pour les contacts individuels est du type suivant: le joint est fixe et la ferrule ou une partie du contact coulisse à l'intérieur de ce joint.

L'étanchéité est donc garantie quelle que soit la position de la ferrule. Cependant le fait d'avoir une liaison mécanique permanente sur toute la course du contact péjore sa compliance en position enfichée (c'est-à-dire en position connectée) et donc par conséquence sa stabilité et résistance aux différentes contraintes mécaniques (vibrations etc).

A titre d'exemple, le brevet US 6,357,929 illustre un connecteur dans lequel l'étanchéité au niveau du contact est maintenue quelle que soit la position dudit contact (connecté ou déconnecté) de sorte qu'une telle liaison mécanique est permanente avec les conséquences négatives mentionnées ci-dessus.

### SOMMAIRE DE L'INVENTION

Un but de l'invention est par conséquent d'améliorer les contacts et les connecteurs connus.

Plus précisément, un but de l'invention est de proposer un contact, par exemple un contact pour connecteur optique, possédant des moyens simples et efficaces pour assurer son étanchéité en position déconnectée.

Un autre but de la présente invention est la réalisation d'un contact étanche garantissant une compliance en position enfichée/connectée.

En particulier, selon l'invention, l'on s'est rendu compte qu'une étanchéité n'est pas nécessaire, voire même superflue, sur le contact en position enfichée (c'est-à-dire connectée) car l'étanchéité est assurée en fait par le boitier/assemblage fiche-connecteur dans cette configuration. Maintenir une étanchéité locale en position enfichée/connectée est donc inutile, voire désavantageux si l'on veut permettre une certaine mobilité des pièces (par exemple pour éviter une influence de vibrations externes), une fois la connexion effectuée, ce que l'on dénomme ici la "compliance".

En d'autres termes, l'on cherche à assurer pour un contact individuel une étanchéité en état déconnecté et une certaine mobilité en état connecté.

Le système développé pour surmonter les problèmes identifiés et atteindre les buts de l'invention est de rendre solidaires le joint et la ferrule et de permettre au joint de bouger avec cette dernière pour avoir un effet ou non selon la position effective de la ferrule (correspondant à l'état connecté ou déconnecté).

De cette façon, le joint devient une partie mobile qui n'entrave plus la compliance en position enfichée/connectée.

Par voie de conséquence l'étanchéité individuelle du contact n'est plus garantie en position enfichée, mais une telle étanchéité n'est concrètement pas nécessaire puisqu'elle est assurée au niveau du connecteur. Par contre grâce à l'utilisation de la force d'un ressort ou d'un autre moyen équivalent pour la compression du joint, le contact en position désenfichée devient étanche.

De plus, l'utilisation d'un moyen de type ressort permet d'améliorer le contact de l'extrémité de la ferrule ce qui a un effet bénéfique pour le connecteur, comme on le comprendra dans la suite de la présente description.

Dans un mode d'exécution, l'invention propose un assemblage d'un joint (par exemple de type O-ring) sur une ferrule d'alignement optique permettant de créer une étanchéité en position de repos non connecté. Ledit joint est lié à la ferrule et se déplace avec celle-ci lors du retrait de ladite ferrule lors de l'enfichage du connecteur complet, permettant de ne pas dégrader la précision de l'alignement de la ferrule lors de son insertion dans la douille d'alignement intervenant lors de la connexion du système complet.

L'invention porte sur un contact étanche déconnecté et compliant connecté, qui comprend au moins un corps de contact dans lequel sont positionnés un moyen de transmission tenu dans un support au bout duquel une ferrule est placée, une étanchéité entre la ferrule et le moyen de transmission étant réalisée par un remplissage de produit de scellement, dans lequel un moyen d'étanchéité est prévu entre la ferrule et le corps de contact, ledit moyen créant une étanchéité entre la ferrule et le corps de contact lorsque le contact est déconnecté et permettant une isolation mécanique de la ferrule par rapport au corps de contact lorsque le contact et connecté.

Dans un mode d'exécution, le moyen d'étanchéité est un joint monté sur la ferrule.

Dans un mode d'exécution, le joint est un O-ring.

Dans un mode d'exécution, le moyen d'étanchéité est un élément souple ajouté sur la ferrule par surmoulage.

Dans un mode d'exécution, le moyen d'étanchéité est un élément souple ajouté sur le corps de contact par surmoulage.

Dans un mode d'exécution, les surfaces de contact entre la ferrule et le corps de contact au niveau du moyen d'étanchéité sont planes ou ont des formes complémentaires.

Dans un mode d'exécution, les surfaces de contact entre la ferrule, le corps de contact et l'élément souple sont planes ou ont des formes complémentaires.

Dans un mode d'exécution, le moyen de transmission est une fibre optique.

Dans un mode d'exécution, le moyen de scellement est de l'epoxy.

Dans un mode d'exécution, l'invention concerne un connecteur comprenant au moins un contact tel que défini dans la présente demande.

### BREVE DESCRIPTION DES DESSINS

L'invention sera mieux comprise par la description de modes d'exécution et des figures qui s'y rapportent dans lesquelles
La figure 1 illustre en coupe un mode d'exécution d'un connecteur en état déconnecté;
La figure 2 illustre en coupe un mode d'exécution d'un connecteur en état connecté.
La figure 3 illustre en coupe un mode d'exécution de deux connecteur en état connecté l'un à l'autre.

### DESCRIPTION DETAILLEE

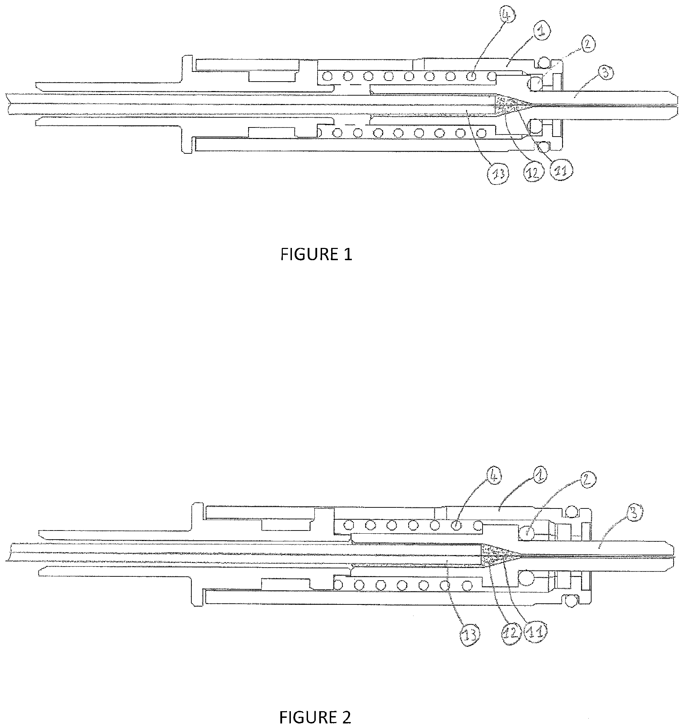

Figure 1: Position au repos (désenfiché/déconnecté)

Dans cette position le contact est considéré comme étanche selon les principes de la présente invention.

Plus précisément, le contact comprend un corps de contact 1 dans lequel sont positionnés une fibre optique 11 tenue dans un buffer 13 au bout duquel (côté contact) se situe une ferrule 3. L'étanchéité entre la ferrule 3 et la fibre optique 11 est garantie par un remplissage de produit de scellement (par exemple de l'epoxy) 12 autour de la fibre optique 11 et du buffer de ladite fibre 13 ou par d'autres moyens équivalents.

Un moyen formant joint 2, par exemple un O-Ring, est positionné sur la ferrule 3 et permet de créer une barrière étanche entre ladite ferrule 3 et le corps de contact 1. Dans ce but, le joint 2 est comprimé entre le corps de contact 1 et la ferrule 3 en utilisant la force de compression produite par un ressort 4.

Dans cet état "déconnecté", le contact est par conséquent étanche selon les principes exposés dans la présente demande.

Figure 2: Position sous contrainte (enfiché/connecté)

Lorsque que l'on réalise un enfichage du contact, la ferrule 3 recule relativement au corps de contact 1 sous l'action du contact opposé (par exemple une ferrule identique) pour prendre sa position enfichée illustrée dans la figure 2.

Dans cette position, le moyen formant joint 2 garde sa position initiale sur la ferrule 3 du fait d'un léger serrement dudit joint 2 sur ladite ferrule 3. En conséquence, le joint 2 ne péjore jamais le jeu dimensionné autour de la ferrule qui permet à ladite ferrule 3 d'être isolée mécaniquement du corps de contact 1. Cette isolation mécanique également appelée compliance n'est, du fait du mouvement relatif du joint 2, jamais entravée par ledit joint 2

Ainsi, la ferrule 3 est isolée de toute contrainte, vibrations etc qui seraient appliqués au connecteur ce qui permet d'assurer un bon contact dans la connection par exemple ferrule contre ferrule et par conséquent fibre optique contre fibre optique.

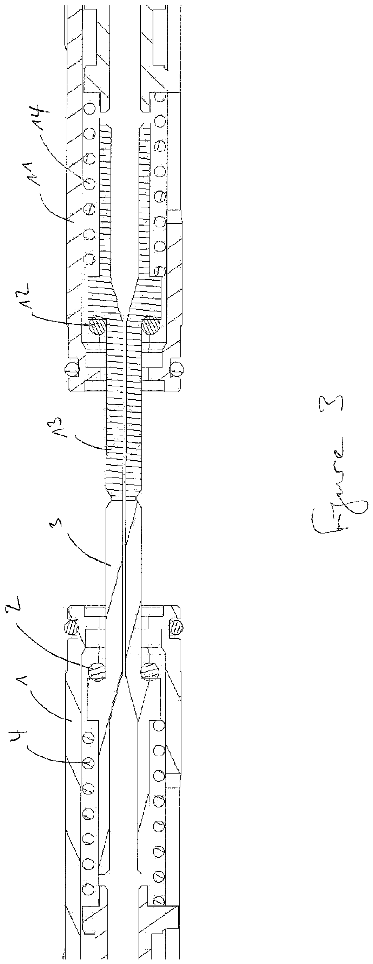

Un tel état connecté ferrule contre ferrule est illustré dans la figure 3. Le contact du côté gauche est par exemple celui décrit en référence aux figures 1 et 2 ci-dessus et son état (connecté) correspond donc à la figure 2, où le joint 2 s'est déplacé avec le ferrule 3. Le contact illustré sur le côté droit de la figure 3 est typiquement identique à celui du côté gauche en ce sens qu'il comprend les mêmes moyens originaux, à savoir notamment un corps 11, un moyen formant joint 12, une ferrule 13 et un moyen de pression comme un ressort 14. Comme on le comprend aisément de la description ci-dessus, quand les deux contacts sont connectés l'un à l'autre, les deux ferrules 3 et 13 s'appliquent bout-à-bout l'une contre l'autre et, par ce contacte se repoussent mutuellement de sorte que les joints 2, 12 reculent également et n'assurent plus l'étanchéité.

Toutefois, selon les effets obtenus par la présente invention, les deux contacts possèdent dans cet état une compliance et sont isolés mécaniquement du connecteur qui les porte. De plus, l'utilisation d'un ressort 4, 14 tel qu'illustré permet de façon avantageuse d'améliorer le contact des ferrules 3, 13 bout à bout puisque les deux ressorts 4, 14 exercent leur force de rappel l'un contre l'autre. Ils permettent donc d'exercer une certaine pression sur les surfaces de contact des ferrules 3, 13, voir de maintenir un bon contact quelles que soit les influences extérieures subies par le connecteur (mouvements, vibrations etc.).

Les modes d'exécution décrits sont des exemples illustratifs qui ne doivent pas être interprétés de façon limitative. Des variations sont possibles en faisant appel à des moyens équivalents pour obtenir le même résultat.

Par exemple le joint 2 est illustré sous forme de O-ring mais un autre joint équivalent est tout à fait envisageable. Par exemple on peut imaginer un joint de section rectangulaire. On peut également envisager de faire appel à des formes complémentaires entre la ferrule 3 et l'intérieur du corps de contact pour améliorer encore l'étanchéité à la place des surfaces planes illustrées dans les figures 1 et 2.

Dans un autre mode d'exécution, l'effet du joint 2 peut être réalisé par recouvrement de la ferrule par surmoulage d'un élément souple ou autre procédé de recouvrement.

Dans un autre mode d'exécution, l'effet du joint 2 peut être réalisé par recouvrement du contact par surmoulage d'un élément souple ou autre procédé de recouvrement.

Ces deux modes d'exécution peuvent être combinés pour prévoir un élément souple surmoulé sur la ferrule et sur le corps de contact, avec des surfaces de contact planes ou complémentaires.

Le ressort 4 peut lui aussi être remplacé par un autre moyen équivalent remplissant la même fonction.

Le contact selon la présente invention est de préférence un contact optique utilisant une fibre optique. Toutefois, les principes de la présente invention sont applicables à d'autres types de contact, par exemple des contacts électriques.

## Revendications

1. Contact de connecteur, comprenant au moins un corps de contact (1), un moyen de transmission (11), un support (13) du moyen de transmission (11), ledit support (13) comprenant à son bout une ferrule (3), un ressort appliquant une force de compression sur la ferrule et un produit de scellement (12) réalisant une étanchéité entre la ferrule (3) et le moyen de transmission (11), **caractérisé en ce que** le contact comprend un moyen d'étanchéité (2) souple entre la ferrule (3) et le corps de contact (1) de manière à créer une étanchéité entre la ferrule (3) et le corps de contact (1) lorsque le contact est déconnecté et la ferrule soumise à la force du ressort (4) et lorsque le contact est connecté, la ferrule (3) est isolée de toute contrainte mécanique par rapport au corps de contact, ladite isolation mécanique n'étant pas entravée par ledit moyen d'étanchéité (2).

2. Contact selon la revendication 1, dans lequel le moyen d'étanchéité comprend un joint (2) monté sur la ferrule (3).

3. Contact selon la revendication 2, dans lequel le joint est un O-ring (2).

4. Contact selon la revendication 1, dans lequel le moyen d'étanchéité est un élément ajouté sur la ferrule (3) par surmoulage.

5. Contact selon l'une des revendications 1 ou 4, dans lequel le moyen d'étanchéité comprend un élément souple ajouté sur le corps de contact (1) par surmoulage.

6. Contact selon la revendication 1, dans lequel les surfaces de contact entre la ferrule (3) et le corps de contact (1) au niveau du moyen d'étanchéité sont planes ou ont des formes complémentaires.

7. Contact selon la revendication 4 ou 5, dans lequel les surfaces de contact entre la ferrule (3), le corps de contact (1) et l'élément souple sont planes ou ont des formes complémentaires.

8. Contact selon l'une des revendications précédentes, dans lequel le moyen de transmission (11) est une fibre optique.

9. Contact selon l'une des revendications précédentes, dans lequel le moyen de scellement (12) est de l'epoxy.

10. Connecteur comprenant au moins un contact tel que défini dans l'une des revendications précédentes.

## Patentansprüche

1. Verbinderkontakt, welcher wenigstens einen Kontaktkörper (1), ein Übertragungsmittel (11), einen Träger (13) des Übertragungsmittels (11), wobei der Träger (13) an seinem Ende eine Ferrule (3) umfasst, eine Feder, die eine Druckkraft auf die Ferrule ausübt, und ein Versiegelungsprodukt (12), das eine Dichtigkeit zwischen der Ferrule (3) und dem Übertragungsmittel (11) herstellt, umfasst, **dadurch gekennzeichnet, dass** der Kontakt ein nachgiebiges Dichtmittel (2) zwischen der Ferrule (3) und dem Kontaktkörper (1) umfasst, um so eine Dichtigkeit zwischen der Ferrule (3) und dem Kontaktkörper (1) zu erzeugen, wenn der Kontakt getrennt ist und auf die Ferrule die Kraft der Feder (4) einwirkt, und dass, wenn der Kontakt verbunden ist, die Ferrule (3) von jeder mechanischen Beanspruchung in Bezug auf den Kontaktkörper isoliert ist, wobei diese mechanische Isolation nicht durch das Dichtmittel (2) beeinträchtigt wird.

2. Kontakt nach Anspruch 1, wobei das Dichtmittel eine Dichtung (2) umfasst, die auf der Ferrule (3) angebracht ist.

3. Kontakt nach Anspruch 2, wobei die Dichtung ein O-Ring (2) ist.

4. Kontakt nach Anspruch 1, wobei das Dichtmittel ein Element ist, das zu der Ferrule (3) durch Umspritzen hinzugefügt wird.

5. Kontakt nach einem der Ansprüche 1 oder 4, wobei das Dichtmittel ein nachgiebiges Element umfasst, das zu dem Kontaktkörper (1) durch Umspritzen hinzugefügt wird.

6. Kontakt nach Anspruch 1, wobei die Kontaktflächen zwischen der Ferrule (3) und dem Kontaktkörper (1) an dem Dichtmittel eben sind oder komplementäre Formen aufweisen.

7. Kontakt nach Anspruch 4 oder 5, wobei die Kontaktflächen zwischen der Ferrule (3), dem Kontaktkörper (1) und dem nachgiebigen Element eben sind oder komplementäre Formen aufweisen.

8. Kontakt nach einem der vorhergehenden Ansprüche, wobei das Übertragungsmittel (11) ein Lichtwellenleiter ist.

9. Kontakt nach einem der vorhergehenden Ansprüche, wobei das Versiegelungsmittel (12) Epoxidharz ist.

10. Verbinder, welcher wenigstens einen Kontakt umfasst, wie in einem der vorhergehenden Ansprüche definiert.

## Claims

1. Connector contact, comprising at least a contact body (1), a transmission means (11), a support (13) for the transmission means (11), said support (13) comprising, at its end, a ferrule (3), a spring applying a compressive force on the ferrule and a sealant product (12) forming a seal between the ferrule (3) and the transmission means (11) **characterized in that** the contact comprises a flexible sealing means (2) between the ferrule (3) and the contact body (1) so as to create a seal between the ferrule (3) and the contact body (1) when the contact is disconnected and the ferrule is subjected to the force of the spring (4) and when the contact is connected, the ferrule (3) is isolated from any mechanical stress relative to the contact body, said mechanical isolation not being hindered by said sealing means (2).

2. Contact according to Claim 1, wherein the sealing means comprises a seal (2) mounted on the ferrule (3) .

3. Contact according to Claim 2, wherein the seal is an O-ring (2).

4. Contact according to Claim 1, wherein the sealing means is an element added to the ferrule (3) by overmoulding.

5. Contact according to one of Claims 1 to 4, wherein the sealing means comprises a flexible element added to the contact body (1) by overmoulding.

6. Contact according to Claim 1, wherein the contact surfaces between the ferrule (3) and the contact body (1) at the position of the sealing means are flat, or have complementary shapes.

7. Contact according to Claim 4 or 5, wherein the contact surfaces between the ferrule (3), the contact body (1) and the flexible element are flat, or have complementary shapes.

8. Contact according to one of the preceding claims, wherein the transmission means (11) is an optical fibre.

9. Contact according to one of the preceding claims, wherein the sealing means (12) is epoxy.

10. Connector comprising at least one contact as defined in one of the preceding claims.
